# EUROPÄISCHE PATENTSCHRIFT

(11) **EP 0 775 048 B1**
(45) Veröffentlichungstag und Bekanntmachung des Hinweises auf die Patenterteilung: **25.03.1998**
(21) Anmeldenummer: 95926791.5
(22) Anmeldetag: 10.08.1995
(51) Int. Cl.: B29C 45/17

(54) **EINRICHTUNG ZUM SPRITZGIESSEN VON KUNSTSTOFF**
INJECTION MOULDING DEVICE FOR PLASTICS
DISPOSITIF DE MOULAGE PAR INJECTION POUR MATIERES PLASTIQUES

(30) Priorität: 11.08.1994 AT 237/94 U
(43) Veröffentlichungstag der Anmeldung: 28.05.1997
(73) Patentinhaber: ENGEL MASCHINENBAU GESELLSCHAFT MBH, A-4311 Schwertberg (AT)
(72) Erfinder: Kappelmüller, Werner, 4311 Schwertberg (AT); Leonhartsberger, Heinz, 4311 Schwertberg (AT)
(74) Vertreter: Hofinger, Engelbert, DDr.
(86) Internationale Anmeldenummer: AT9500162
(87) Internationale Veröffentlichungsnummer: WO9605041

(56) Entgegenhaltungen:
- EP-A- 0 311 133
- WO-A-95/04643
- DE-C- 849 655
- DE-U- 9 212 480
- PATENT ABSTRACTS OF JAPAN vol. 13 no. 94 (M-804) [3442] ,6.März 1989 & JP,A,63 286316 (FANUC) 24.November 1988,

## Beschreibung

Die Erfindung bezieht sich auf eine Einrichtung zum Spritzgießen von thermoplastischen Kunststoffen, mit einem etwa C-förmigen Rahmen, der von der Schließkraft aufgebogen wird, die von einer Schließeinrichtung zwischen den von je einer ortsfesten und einer verfahrbaren Formaufspannplatte getragenen Formhälften erzeugt wird, wobei der Winkel zwischen wenigstens einer Formaufspannplatte und dem zugeordneten Schenkel des Rahmens veränderlich ist.

In jüngster Zeit sind mehrere derartige Einrichtungen vorgeschlagen worden (vgl. beispielsweise DE-U 9212480.1). Die gelenkige Lagerung mindestens einer der Formaufspannplatten hat dabei den Zweck, die Orientierung dieser Platte unabhängig von Verformungen des zugehörigen vertikalen Schenkels des Maschinenrahmens zu machen, wie sie bei holmlosen Maschinen auftreten können. Weist jede Formaufspannplatte ein Gelenk auf, so behalten beim Aufbringen des Schließdruckes die beiden Formaufspannplatten und die daran befestigten Formhälften ihre Orientierung im Raum bei, während sich die Rahmenschenkel nach außen biegen. Eine besonders einfache Konstruktion zeigt EP-B2 311 133, bei welcher nur die verfahrbare Formaufspannplatte kippbar gelagert ist. Hier wird die Plattenparallelität dadurch erreicht, daß die verfahrbare Formaufspannplatte die Verschwenkung der ortsfesten Formaufspannplatte mitmacht. Der Winkel, um den sich das Drehgelenk verschwenkt, entspricht damit der Summe der Verschwenkungen der beiden vertikalen Schenkel des Maschinenrahmens.

Bei herkömmlichen Maschinen wird die bewegbare Formaufspannplatte während des Verfahrens durch Federkraft an einen Anschlag gedrückt, welcher die Platte vertikal ausrichtet, sodaß die beiden Formhälften bereits in exakt paralleler Lage aufeinander treffen. Das vom Gewicht der bewegbaren Formaufspannplatte auf das Drehgelenk ausgeübte Moment wird also von der Feder zumindest kompensiert. Verformt sich anschließend beim Aufbringen der Schließkraft der Rahmen, so muß auf das Drehgelenk ein Moment ausgeübt werden, welches das Gelenk bewegt. Auf die Konstruktion des Gelenkes kommt es dabei nicht an: handelt es sich um einen in der Lagerschale bewegbaren Bolzen od. dgl., muß die Lagerreibung überwunden werden, sind Rahmen und Formaufspannplatten durch ein verformbares Zwischenglied verbunden, so ist gegen dessen Elastizität Arbeit zu leisten. Bei bekannten Einrichtungen befinden sich im Gelenksbereich nur passive Maschinenelemente, wie Federn und unbewegliche Anschläge, sodaß das zusätzliche Moment zur Drehung des Gelenkes bei Verformung des Maschinenrahmens dadurch erzeugt werden muß, daS durch die Schließkraft die Form im unteren Bereich zunächst stärker komprimiert wird als im oberen. Das erübrigt zwar eine gesonderte Steuerung, da die selbe Schließkraft, welche den Rahmen verformt, auch das Gelenk verdreht, doch setzt die Bewegung erst ein, wenn eine bestimmte Mindestverformung des Maschinenrahmens und der Form erfolgt ist.

Aufgabe der Erfindung ist es, den Winkel zwischen Formaufspannplatte und Rahmen gezielt zu beinflussen, wobei die Eigenschaften der Form von möglichst geringer Bedeutung sein soll.

Gelöst wird diese Aufgabe dadurch, daß eine steuerbare Einrichtung vorgesehen ist, durch deren Betätigung ein den Winkel zwischen Formaufspannplatte und Rahmen vergrößerndes Drehmoment auf die Formaufspannplatte ausgeübt bzw. wirksam gemacht wird.

In der einfachsten Form erfolgt die Aufbringung eines zusatzlichen Drehmomentes bei Erhöhung der Schließkraft dadurch, daß ein Anschlag gelöst wird, welcher während des Verfahrens der Formaufspannplatte verhindert hat, daß diese sich unter dem Einfluß ihres eigenen Gewichtes dreht. Damit wird das Gewicht der Platte im Sinne einer Abknickung des Gelenkes wirksam.

In weiterer Ausbildung der Erfindung kann vorgesehen sein, daß die Einrichtung zur Beeinflussung der Plattenorientierung als mit einem Antrieb versehene Stelleinrichtung ausgebildet ist, welche die Formaufspannplatte aktiv in die gewünschte Winkellage dreht.

Weitere Einzelheiten der Erfindung werden anschließend anhand von Ausführungsbeispielen erläutert.

Nachfolgend wird ein Ausführungsbeispiel der Erfindung anhand der Figuren der beiliegenden Zeichnungen eingehend beschrieben.
Die Fig. 1 zeigt eine Seitenansicht eines ersten Ausführungsbeispieles einer erfindundgemäßen spritzgießmaschine,
die Fig. 2 zeigt eine Seitensicht der bewegbaren Formaufspannplatte und des Schließkolbens, wobei der Schließkolben teilweise im Schnitt gezeichnet ist,
die Fig. 3 zeigt den Schnitt I-I der Fig. 2, und
die Fig. 4 zeigt ein zweites Ausführungsbeispiel der Erfindung in vertikal geschnittener Seitenansicht.

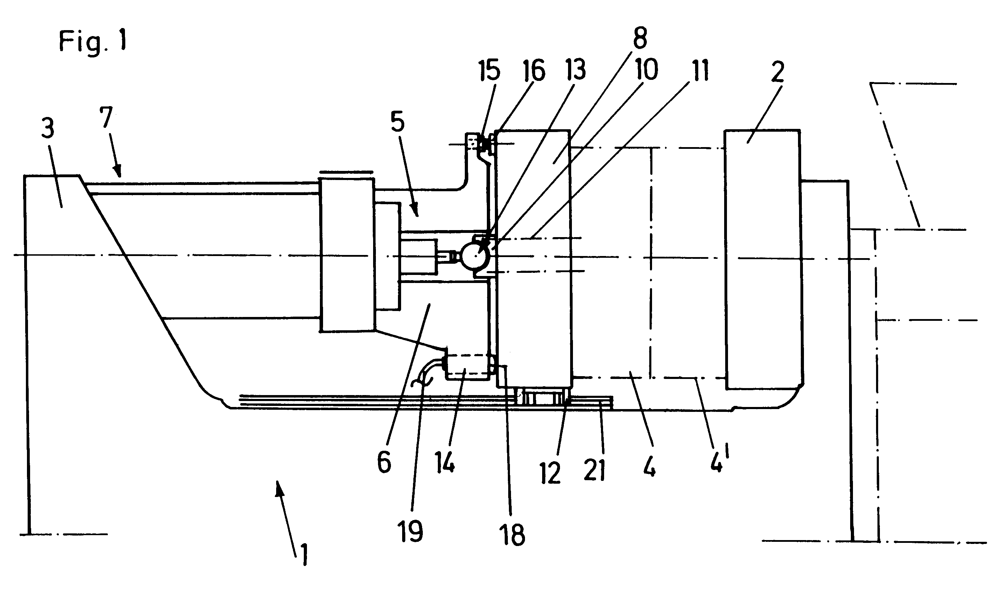

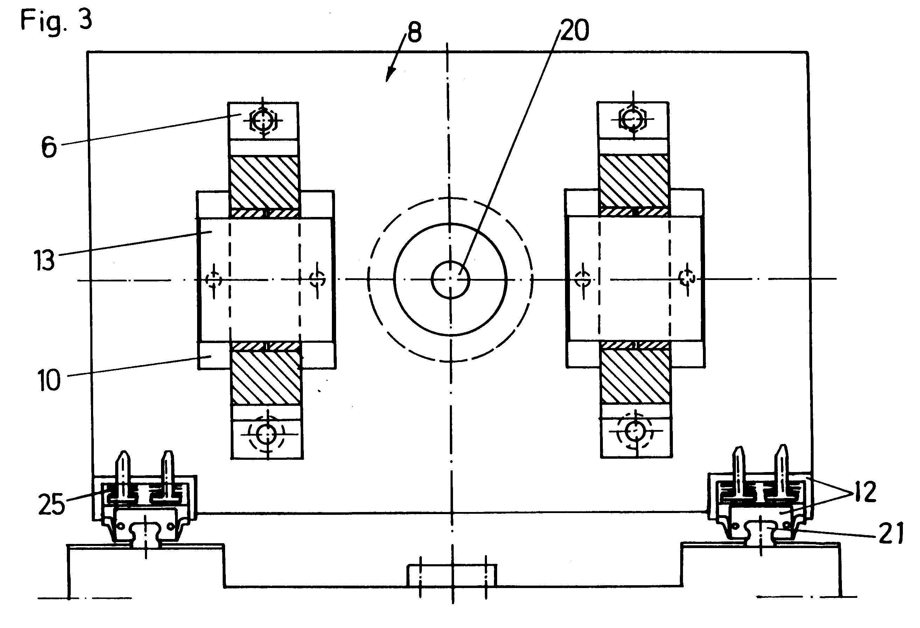

Wesentlicher Teil der in Fig. 1 bis 3 dargestellten Spritzgießmaschine ist der Maschinenrahmen 1, der einstückig mit der ortsfesten Formaufspannplatte 2 und der Zylinderplatte 3 gefertigt ist, d. h. die Formaufspannplatte 2 und die Zylinderplatte 3 sind am Maschinenrahmen 1 angeformt bzw. auf diesem fest montiert.

An der Formaufspannplatte 2 ist das Spritzaggregat mit dem Zuführtrichter für die Granulatzufuhr gelagert.

Auf das Spritzaggregat soll in diesem Rahmen nicht weiter eingegangen werden, es bildet nicht Gegenstand der Erfindung und ist nach dem Stand der Technik gefertigt.

Die Zylinderplatte 3 trägt eine Kolben-Zylindereinheit 7, deren Kolben 5 mit der bewegbaren Formaufspannplatte 8 verbunden ist und die den Schließmechanismus bildet.

Die Formaufspannplatten 2, 8 tragen die Formhälften 4, 4'.

Mittels der Kolben-Zylindereinheit 7 wird die bewegbare Formaufspannplatte 8 während des Spritzvorganges mit der Formhälfte 4 gegen die Formhälfte 4' der ortsfesten Formaufspannplatte 2 gehalten.

Bei einer Schließeinheit bei der eine hohe Schließkraft holmlos ausschließlich über den Rahmen 1 übertragen wird, verhindert ein Gelenk 13 das Aufklaffen im oberen Werkzeugbereich, d. h. zwischen den beiden Formhälften 4, 4'. Durch dieses Gelenk 13 kann sich die bewegbare Formaufspannplatte 8 mit ihrer Formhälfte 4 bei hoher Schließkraft auch dann an die ortsfeste Formaufspannplatte 2 mit der zugehörigen Formhälfte 4' parallel anlegen, wenn die ortsfeste Formaufspannplatte 2 nach hinten kippt.

Der Schließkolben 5 trägt im gezeigten Ausführungsbeispiel an seinem vorderen Ende zwei Abstützplatten 6. Neben den Abstützplatten 6 sind Lagersockel 10 der bewegbaren Formaufspannplatte 8 vorgesehen, die die Lagerschalen für das Gelenk 13 tragen. Die Lagersockel 10 sind mit der bewegbaren Formaufspannplatte 8 mittels Gewindebolzen 11 verschraubt.

Am oberen Rand sind die Abstützplatten 6 mit verstellbaren Anschlägen 15 versehen, die an der bewegbaren Formaufspannplatte 8 anliegen.

Beim unteren Rand der Abstützplatte 6 ist mindestens ein Anschlag 14 vorgesehen, der jedoch verstellbar bzw. lösbar ist und im Ausführungsbeispiel von einem Hydraulikzylinder 17 mit einem Kolben 18 gebildet wird. Der Hydraulikzylinder 17 ist über Leitungen 19 an eine nicht gezeigte Hydraulikpumpe angeschlossen.

Die bewegbare Formaufspannplatte 8 ist mittels Laufschuhen 12 auf am Maschinenrahmen 1 gelagerten Schienen 21 geführt. Die Laufschuhe 12 sind zwar auf den Schienen 21 durch Formschluß gehalten, ermöglichen jedoch ein kurzes federndes Abheben der Formaufspannplatte 8 bei sehr hohem Schließdruck gegen die Wirkung von Federpaketen 25.

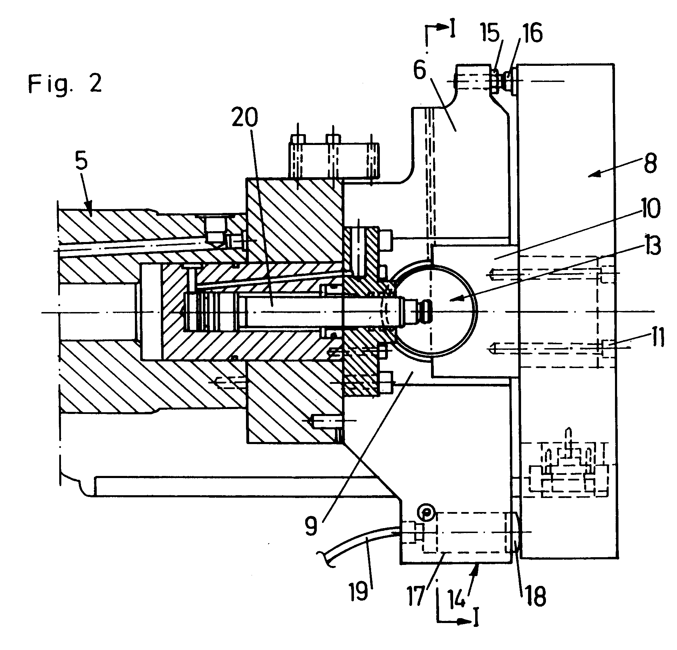

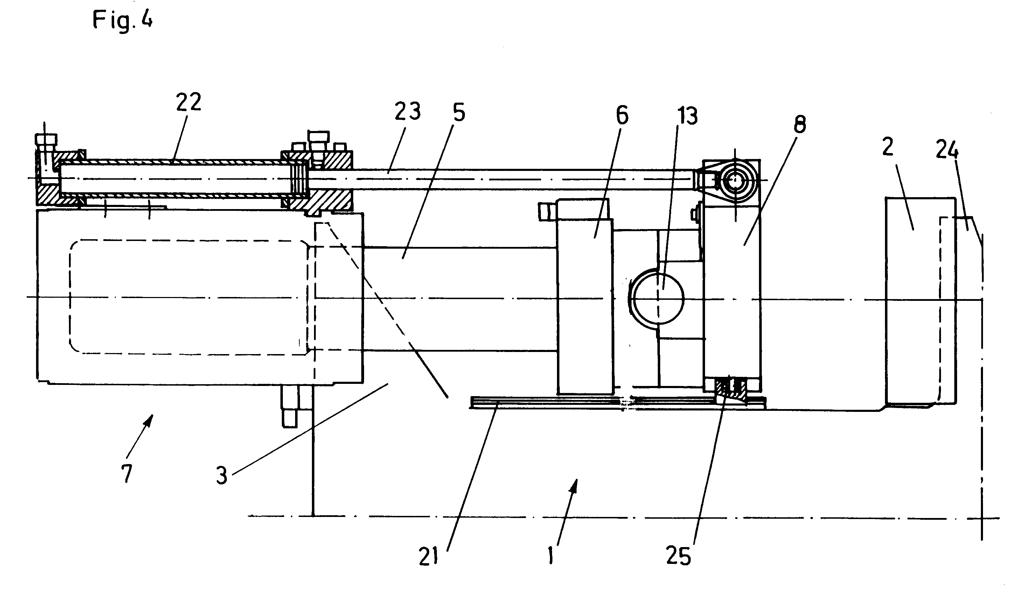

In der Fig. 2 ist noch der hydraulische Auswerfer 20 im Schließkolben 5 gezeigt.

Beim Einspritzvorgang ist die bewegbare Formaufspannplatte 8 zuerst durch die Anschläge 14, 15 in bezug auf die Abstützplatte arretiert und kann keine Drehung um das Gelenk 13 durchführen.

Erhöht sich der Schließdruck bzw. erfolgt beim Spritzprägen der eigentliche Prägedruck, wird der Anschlag 14 gelöst, d.h. der Druck beim Kolben 18 in den Zylinder 17 zurückgenommen und die bewegbare Formaufspannplatte 8 kann eine leichte Drehbewegung im Uhrzeigersinn ausführen, um sich der nach hinten gekippten ortsfesten Formaufspannplatte 2 anzupassen und die Formparallelität aufrechtzuerhalten.

Der Zylinder 17 ist dabei über die Leitungen 19 an eine Pumpe angeschlossen, die von einer Steuerung gesteuert wird, die die Pumpe in Abhängigkeit vom Schließdruck des Schließkolbens 5 aktiviert.

Beim Ausführungsbeispiel nach Fig. 4 ist in bekannter Weise zusätzlich zur Kolben-Zylinder-Einheit 7, welche den Schließdruck aufbringt, ein Eilhubzylinder 22 mit hydraulisch betätigten Kolben 23 vorgesehen. Gemäß dem Stand der Technik wäre dieser Kolben 23 an der Abstützplatte 6 befestigt. Erfindungsgemäß greift der Kolben 23 jedoch an der bewegbaren Formaufspannplatte 8 an und kann diese damit um das Gelenk 13 drehen, sobald die Schließkraft die am zugehörigen Schenkel 24 des Rahmens 1 befestigte ortsfeste Formaufspannplatte 2 im Uhrzeigersinn verschwenkt. Die bewegbare Formaufspannplatte 8 kann dadurch die Schwenkung der ortsfesten Formaufspannplatte 2 mitmachen und die zwischen diesen beiden Platten aufgespannten Formhälften bleiben exakt parallel zueinander.

Beide Ausführungsformen der Erfindung stellen sicher, daß eine gegenüber dem zugehörigen Rahmenschenkel verschwenkbare Formaufspannplatte während der Schließ- und Öffnungsbewegung parallel zu diesem Rahmenschenkel ausgerichtet ist und beim Aufbringen der Schließkraft unter den Einfluß eines Drehmomentes gelangt, welches die Einstellung des gewünschten Winkels zwischen Rahmenschenkel und Formaufspannplatte begünstigt. Um die gewünschte Größe des zusätzlichen Drehmomentes zu erzielen, wird im allgemeinen eine einfache Steuerung ausreichen, jedenfalls dann, wenn die im Gelenk 13 wirkende Reibungskraft, das im Uhrzeigersinn wirkende Werkzeuggewicht und die Kraft der zwischen Laufschuh 12 und Formaufspannplatte 8 im Sinne eines Abhebens der Formaufspannplatte 8 wirkenden Feder 25 bekannt sind. Andererseits ist es aber ohne weiteres möglich den Winkel zu berechnen, um welchen sich das Gelenk 13 bei gegebener Schließkraft und damit Aufbiegung des Rahmens 1 und bei gegebener Formhöhe bewegen soll. Steht so wie beim Ausführungsbeispiel nach Fig. 4 eine Einrichtung zur aktiven Aufbringung eines einstellbaren Drehmomentes auf die Formaufspannplatte zur Verfügung, kann nicht nur der gewünschte Wert des Drehmomentes im Sinne einer Steuerung eingestellt werden, sondern es ist auch eine Regelung zur Erzielung des gewünschten Drehwinkels des Gelenkes möglich. Wahlweise könnte der Druck im Eilhubzylinder 22, 23 auch so lange verändert werden, bis nach Drehung des Gelenkes 13 die beiden Formaufspannplatten gleichmäßig belastet sind bzw. exakt parallel zueinander verlaufen.

Der aktiv ein Drehmoment um das Gelenk 13 ausübende Hydraulikkolben muß natürlich nicht Teil der für den Eilhub zuständigen Hydraulikeinheit sein. Insbesondere wenn eine unsymmetrische Eilhubeinrichtung unerwünscht ist, kann eine Hydraulikeinheit, welche zwischen der Abstützplatte 6 und der Formaufspannplatte 8 wirkt, vorzugsweise am oberen Rand dieser Platten angeordnet werden. Wenn eine Rückholfeder 25 vorgesehen ist, genügt es, wenn eine solche Hydraulikeinheit die Formaufspannplatte 8 durch Aufbringen eines Druckes aus der Normallage in die gekippte Stellung bringen kann.

## Patentansprüche

1. Einrichtung zum Spritzgießen von thermoplastischen Kunststoffen, mit einem etwa C-förmigen Rahmen, der von der Schließkraft aufgebogen wird, die von einer Schließeinrichtung zwischen den von je einer ortsfesten und einer verfahrbaren Formaufspannplatte getragenen Formhälften erzeugt wird, wobei der Winkel zwischen wenigstens einer Formaufspannplatte und dem zugeordneten Schenkel des Rahmens veränderlich ist, dadurch gekennzeichnet, daß eine steuerbare Einrichtung vorgesehen ist, durch deren Betätigung ein den Winkel zwischen Formaufspannplatte und Rahmen vergrößerndes Drehmoment auf die Formaufspannplatte ausgeübt bzw. wirksam gemacht wird.

2. Einrichtung nach Anspruch 1, dadurch gekennzeichnet, daß die Einrichtung zur Beeinflussung der Plattenorientierung als mit einem Antrieb versehene Stelleinrichtung ausgebildet ist, welche die Formaufspannplatte aktiv in die gewünschte Winkellage dreht.

3. Einrichtung nach Anspruch 1 oder 2, dadurch gekennzeichnet, daß die Einrichtung zur Beeinflussung der Plattenorientierung als lösbarer Anschlag ausgebildet ist, der im fixierten Zustand die Formaufspannplatte parallel zum zugeordneten Schenkel des Rahmens hält.

4. Einrichtung nach Anspruch 2 oder 3, dadurch gekennzeichnet, daß die Stelleinrichtung bzw. der Anschlag (14) von einem Hydraulikkolben (18) gebildet ist.

5. Einrichtung nach Anspruch 4, dadurch gekennzeichnet, daß der Anschlag von einem Motor oder einer Pumpe beaufschlagbar ist.

6. Spritzgießmaschine, nach einem der Ansprüche 1 bis 5, gekennzeichnet durch einen Schließmechanismus mit einem Schließkolben und einer als Zylinderplatte ausgebildeten Stirnplatte, wobei die Zylinderplatte, an der die bewegbare Formaufspannplatte abgestützt ist, und die ortsfeste Formaufspannplatte ohne Holme ausschließlich über den Maschinenrahmen verbunden sind, und wobei die bewegbare Formaufspannplatte um eine horizontale Achse kippbar gelagert ist, so daß beim Aufbringen einer Schließkraft die bewegbare Formaufspannplatte sich parallel zur ortsfesten Formaufspannplatte neigt und dazu am Schließkolben ein Gelenk mit einem Anschlag vorgesehen ist, das den Schließkolben mit der bewegbaren Formaufspannplatte verbindet, und wobei der Schließkolben (5) mindestens eine Abstützplatte (6) trägt und zwischen der bewegbaren Formaufspannplatte (8) und der Abstützplatte (6) eine Fixiereinrichtung zur zeitweiligen Festlegung der Winkellage zwischen der bewegbaren Formaufspannplatte (8) und der Abstützplatte (6) vorgesehen ist.

7. Einrichtung nach Anspruch 5, dadurch gekennzeich-net, daß der Motor oder die Pumpe an einer Steuerung angeschlossen ist, mittels welcher der Anschlag (14) bei einem ersten Teilhub des Schließkolbens (5) in der Sperrstellung fixiert und vor einem zweiten Teilhub aus der Sperrstellung bewegbar ist.

8. Einrichtung nach Anspruch 2, dadurch gekennzeichnet, daß eine zusätzlich zu der die Schließkraft aufbringenden Einrichtung vorgesehene zur Bewegung der bewegbaren Formaufspannplatte (8) dienende Hydraulikeinheit an der bewegbaren Formaufspannplatte (8) selbst angelenkt und während des Aufbringens der Schließkraft mit Druck beaufschlagbar ist.

9. Einrichtung nach Anspruch 8, dadurch gekennzeichnet, daß während des Schließvorganges eine Feder (25) der Formaufspannplatte (8) gegen die Wirkung ihres Gewichtes und des Eilhubzylinders (22) bzw. Eilhubkolbens (23) in Normalstellung hält.

## Claims

1. Apparatus for injection molding thermoplastic materials, comprising a substantially C-shaped frame which is bent open by the closing force produced by a closing device between the mold halves carried respectively by a stationary and a movable mold mounting plate, wherein the angle between at least one mold mounting plate and the associated limb of the frame is variable, characterised in that there is provided a controllable means, by the actuation of which a torque increasing the angle between the mold mounting plate and the frame is applied to or rendered operative on the mold mounting plate.

2. Apparatus as set forth in claim 1 characterised in that the means for influencing the plate orientation is in the form of a setting means which is provided with a drive and which actively turns the mold mounting plate into the desired angular position,

3. Apparatus as set forth in claim 1 or claim 2 characterised in that the means for influencing the plate orientation is in the form of a releasable abutment which in the fixed condition holds the mold mounting plate parallel to the associated limb of the frame.

4. Apparatus as set forth in claim 2 or claim 3 characterised in that the setting means or the abutment (14) is formed by a hydraulic piston (18).

5. Apparatus as set forth in claim 4 characterised in that the abutment can be acted upon by a motor or a pump.

6. Injection molding machine as set forth in one of claims 1 through 5, characterised by a closing mechanism having a closing piston and having an end plate which is in the form of a cylinder plate, wherein the cylinder plate on which the movable mold mounting plate is supported and the stationary mold mounting plate are connected exclusively by way of the machine frame, without connecting beam members, and wherein the movable mold mounting plate is mounted tiltably about a horizontal axis so that when a closing force is applied, the movable mold mounting plate is inclined parallel to the stationary mold mounting plate and for that purpose provided on the closing piston is a pivot having an abutment, which connects the losing piston to the movable mold mounting plate, and wherein the closing piston (5) carries at least one support plate (6) and provided between the movable mold mounting plate (8) and the support plate (6) is a fixing means for temporarily fixing the angular position as between the movable mold mounting plate (8) and the support plate (6).

7. Apparatus as set forth in claim 5 characterised in that the motor or the pump is connected to a control by means of which the abutment (14) is fixed in the locking position in a first partial stroke movement of the closing piston (5) and is movable out of the locking position prior to a second partial stroke movement.

8. Apparatus as set forth in clam 2 characterised in that a hydraulic unit provided in addition to the means for applying the closing force and serving to move the movable mold mounting plate (8) is pivoted to the movable mold mounting plate (8) itself and can be acted upon by pressure during application of the closing force.

9. Apparatus as set forth in claim 8 characterised in that during the closing operation a spring (25) holds the mold mounting plate (8) against the effect of its weight and the rapid-motion stroke cylinder (22) or rapid-motion stroke piston (23) in a normal position.

## Revendications

1. Dispositif de moulage par injection pour matières thermoplastiques, comportant un cadre à peu près en forme de C et déplié par la force de verrouillage qui est générée par un dispositif de verrouillage entre les demi-moules supportés par respectivement un plateau porte-moule fixe et un plateau porte-moule mobile, l'angle entre au moins un plateau porte-moule et le montant correspondant du cadre étant variable, caractérisé en ce qu'il est prévu un dispositif commandable dont l'actionnement permet d'exercer sur le plateau porte-moule ou de rendre actif un couple agrandissant l'angle entre le plateau porte-moule et le cadre.

2. Dispositif selon la revendication 1, caractérisé en ce que le dispositif destiné à influencer l'orientation du plateau est conçu en tant que dispositif de réglage qui est doté d'un entraînement et fait pivoter activement le plateau porte-moule dans la position angulaire souhaitée.

3. Dispositif selon la revendication 1 ou la revendication 2, caractérisé en ce que le dispositif destiné à influencer l'orientation du plateau est conçu en tant que butée amovible qui à l'état fixe, maintient le plateau porte-moule parallèlement au montant correspondant du cadre.

4. Dispositif selon la revendication 2 ou la revendication 3, caractérisé en ce que le dispositif de réglage ou la butée (14) est formé par un piston hydraulique (18).

5. Dispositif selon la revendication 4, caractérisé en ce que la butée peut être alimentée par un moteur ou une pompe.

6. Presse à mouler par injection selon l'une quelconque des revendications 1 à 5, caractérisée par un mécanisme de verrouillage comportant un piston de verrouillage et une plaque frontale conçue en tant que plaque de cylindre, la plaque de cylindre sur laquelle s'appuie le plateau porte-moule mobile, et le plateau porte-moule fixe étant assemblés sans montant, uniquement par l'intermédiaire du bâti de la machine et le plateau porte-moule mobile étant monté de façon à pouvoir basculer autour d'un axe horizontal de telle sorte que lors de l'application d'une force de verrouillage, le plateau porte-moule mobile s'incline parallèlement au plateau porte-moule fixe et que sur le piston de verrouillage, il est prévu pour cela une articulation comportant une butée et assemblant le piston de verrouillage avec le plateau porte-moule mobile, le piston de verrouillage (5) supportant au moins une plaque d'appui (6) et un dispositif de fixation destiné à la fixation temporaire de la position angulaire entre le plateau porte-moule (8) mobile et la plaque d'appui (6) étant prévu entre le plateau porte-moule (8) mobile et la plaque d'appui (6).

7. Dispositif selon la revendication 5, caractérisé en ce que le moteur ou la pompe est relié à une commande à l'aide de laquelle la butée (14) est fixée dans la position de blocage pour une première course partielle du piston de verrouillage (5) et sort de la position de blocage avant une seconde course partielle.

8. Dispositif selon la revendication 2, caractérisé en ce qu'une unité hydraulique prévue en plus du dispositif appliquant la force de verrouillage et servant à déplacer le plateau porte-moule (8) mobile est articulée sur le plateau porte-moule (8) mobile lui-même et est alimentée en pression pendant l'application de la force de verrouillage.

9. Dispositif selon la revendication 8, caractérisé en ce que pendant le processus de fermeture, un ressort (25) du plateau porte-moule (8) maintient en position normale à l'encontre de l'action de son poids et du cylindre à course rapide (22) ou du piston à course rapide (23).
